# EUROPÄISCHE PATENTANMELDUNG

(11) **EP 3 012 607 A1**
(43) Veröffentlichungstag der Anmeldung: **27.04.2016**
(21) Anmeldenummer: 15001963.6
(22) Anmeldetag: 01.07.2015
(51) Int. Cl.: G01L 1/26, B60T 17/22

(54) **KRAFTMESSVORRICHTUNG**

(30) Priorität: 25.10.2014 DE 102014015869
(71) Anmelder: MAN Truck & Bus AG, 80995 München (DE)
(72) Erfinder: Orgler, Florian, 80335 München (DE); Butz, Matthias, 80687 München (DE)

(57) **Zusammenfassung**

Die Erfindung betrifft eine Kraftmessvorrichtung, insbesondere zur Messung der Hysterese der Zuspann- und Lösebewegung bei Kraftfahrzeugscheibenbremsen. Die Kraftmessvorrichtung (100) umfasst einen einaxialen Kraftsensor (1) und Mittel zum Ausgleich von Quer- und Kippbewegungen relativ zur Messachse des Kraftsensors. Die Mittel (10) zum Ausgleich von Quer- und Kippbewegungen umfassen ein Ausgleichselement (3), auf dem sich der Kraftsensor (1) unmittelbar oder mittelbar über eine erste gekrümmte Gleitfläche (2a) abstützt. Eine dem Kraftsensor (1) zugewandte Seite (3a) des Ausgleichselements (3) ist als zweite gekrümmte Gleitfläche (3a) ausgeführt, in die die erste gekrümmte Gleitfläche (2a) zum Ausgleich einer Kippbewegung relativ zur Messachse eingreift, wobei die erste gekrümmte Gleitfläche (2a) und die zweite gekrümmte Gleitfläche (3a) die gleiche Krümmung aufweisen und gleitverschieblich flächig aneinander anliegen. Ferner weist eine dem Kraftsensor (1) abgewandte Seite (3b) des Ausgleichelements (3) eine plane Gleitfläche (3b) auf, die zum Ausgleich einer Querbewegung auf einer planen Aufstandsgleitfläche (4a) quer zur Messachse gleitverschieblich gelagert ist.

## Beschreibung

Die Erfindung betrifft eine Kraftmessvorrichtung nach dem Oberbegriff des Anspruchs 1, insbesondere eine derartige Kraftmessvorrichtung zur Messung der Hysterese der Zuspann- und/oder Lösebewegung bei Kraftfahrzeugbremsen.

Scheibenbremsen für schwere Nutzfahrzeuge besitzen zur Kraftübersetzung eine innere Hebelmechanik, durch welche die Eingangskraft des angebundenen Bremszylinders derart vergrößert wird, dass in Abhängigkeit von Bremsbelag und Bremszylinder sehr hohe Bremsmomente entstehen können. Abhängig von diesem inneren Hebelmechanismus können die Bremskolben dabei jedoch nichtlineare Zuspannbewegungen wie z. B. Quer- und Kippbewegungen ausführen. Bei diesen inneren Relativbewegungen tritt Reibung auf, durch die der Wirkungsgrad der Bremse reduziert wird. Um diese Reibung zu bestimmen, wird üblicherweise die Hysterese der Zuspann- und Lösebewegung der Bremse ermittelt.

Zur Messung der Hysterese wird dabei üblicherweise eine Kraftmessvorrichtung in Form eines Kraftaufnehmers mit sensiertem Federkörper (sogenannte Kraftmessdosen) in den Belagschacht eines Bremssattels eingelegt, so dass die zuspannenden Bremskolben mit einer ersten Seite der Kraftmessvorrichtung im Eingriff stehen und sich die Kraftmesseinrichtung mit einer weiteren gegenüberliegenden Seite am Bremssattel bzw. am gegenüberliegenden Kolben abstützt.

Nach dem Stand der Technik ist es üblich, zur Messung einer Zuspannkraft einaxiale Kraftmessdosen zu verwenden, die zwei Kraftangriffsflächen besitzen: Eine kleine Kraftangriffsfläche ist dabei meist Teil des aus dem Gehäuse herausragenden Federkörpers, während eine größere Fläche Teil des umgebenden Gehäuses ist, in welchem der Federkörper gelagert ist. Eine solche Kraftmessdose stütz sich somit einerseits über das federnde Glied und andererseits über eine Gehäusefläche ab. Da durch schräge Krafteinleitung in derartige einaxiale Kraftmessdosen eine Verfälschung des Messergebnisses auftritt, werden üblicherweise zwischen die Kraftmessdose und die kraftausübenden bzw. -abstützenden Elemente, z. B. Kolben oder Bremssattel, noch weitere Elemente in den Kraftfluss eingebracht. Diese Elemente ermöglichen dabei, die einaxiale Kraftmessdose von Kipp- oder Querbewegungen und somit auftretenden Querkräften zu entkoppeln, und ermöglichen je nach Ausführung auch eine Adaptierbarkeit auf verschiedenste Anwendungen bzw. Scheibenbremsentypen. Eine bekannte Variante der Querkraftentkopplung ist, kompensierende Querbewegungen zu ermöglichen, beispielsweise mittels zusätzlicher Elemente wie Gleitlager oder Vielkugel-bzw. Querrollenlagern, welche zwischen zwei ebenen Aufstandsflächen eingebracht werden.

Eine alternative Möglichkeit der Querkraftentkopplung ist, kompensierende Kippbewegungen zu ermöglichen, beispielsweise mittels zusätzlicher Elemente, die einen Kippausgleich ermöglichen. Dadurch kann die Kraftmesseinrichtung derart kippen, dass die Kraft in Messachsenrichtung eingeleitet wird. Wie in den Offenlegungsschriften DE 1 084 046, DE 26 59 077 oder DE 1 806 668 beschrieben, wird dazu an beliebiger Stelle im Kraftfluss eine ballige Fläche auf einer ebenen oder anders balligen Fläche abgewälzt. Die Wälzbewegung besteht dabei aus der Abrollbewegung der balligen Fläche, wodurch Kippbewegungen ausgeglichen werden, wodurch Querbewegungen in zwei Raumrichtungen ermöglicht werden.

Nachteilig an den bekannten Kraftmessvorrichtungen ist, dass die Elemente zum Ausgleich der Quer- und Kippbewegungen zum Teil nur mit einem Linien- oder Punktkontakt im Kraftfluss stehen und somit erhöhten Flächenpressungen ausgesetzt sind, da sich die wirkende Kraft nur auf eine geringe Fläche verteilt, was zu einer hohen lokalen Materialbeanspruchung führt. Dadurch kann es vorkommen, dass die Festigkeit des Materials überschritten wird und es zu einer plastischen Verformung der betroffenen Kontaktstelle kommt. Um dem entgegenzuwirken, müssen die Kontaktflächen extra gehärtet werden, was höhere Herstellungskosten verursacht. Trotz einer Härtung können dennoch bei häufigen Kraftmessungen plastische Verformungen an der Kontaktstelle auftreten. Alternativ dazu kann diese Kraft auf jedes Einzelelement auch wieder verringert werden, indem beispielsweise die Anzahl der beteiligten Punkt- oder Linienkontakte, d. h. die Anzahl der kraftübertragenden Rollenkörper, erhöht wird. Auf Grund der unterschiedlichen Toleranzlagen kann dies aber trotzdem zu unterschiedlichen Belastungen der einzelnen Rollenkörper führen. Darüber hinaus arbeiten Vielkugel- bzw. Querrollenlager, wie in der DE 1 806 668 bereits beschrieben, unter hoher Last nicht kontinuierlich, sondern nur absatzweise. Dies kann zu einer Schwankung des Rollwiderstands in Querbewegungen und einer Verfälschung der Messergebnisse führen.

Nachteilig an den aus dem Stand der Technik bekannten Kraftmessvorrichtungen, die Quer- und Kippbewegungen ausgleichen können, ist ferner der hohe Bauraumbedarf, der jedoch bei Anwendungen derartiger Kraftmesseinrichtungen im Belagschacht eines Bremssattels äußerst begrenzt ist. Zudem kann auch die Handhabung eines kompliziert aufzubauenden Prüfstands zu Fehlbedienung und Messungenauigkeiten führen.

Es ist somit eine Aufgabe der Erfindung, eine verbesserte Kraftmessvorrichtung bereitzustellen, mit der Nachteile herkömmlicher Kraftmessvorrichtungen vermieden werden können. Die Aufgabe der Erfindung ist es insbesondere, eine einaxiale Kraftmessvorrichtung mit geringem Bauraumbedarf bereitzustellen, die bei der Messung oft auftretende Querkräfte und Biegemomente möglichst unschädlich für die Kraftmessvorrichtung und das Messergebnis machen kann und/oder die selbstständig Kipp- und Querbewegungen der kraftausübenden Komponente ausgleichen kann, um Querkraft- und Biegemomenteinflüsse zu kompensieren, ohne eine unzulässige Beanspruchung der Elemente im Kraftfluss der Kraftmessvorrichtung zu verursachen. Darüber hinaus soll die Kraftmessvorrichtung möglichst wenig Einzelteile zur kostengünstigen Herstellung aufweisen.

Diese Aufgaben werden durch eine Kraftmessvorrichtung mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die erfindungsgemäße Kraftmessvorrichtung weist in Übereinstimmung mit dem Stand der Technik einen Kraftsensor auf, beispielsweise in Form eines Kraftaufnehmers oder einer Kraftmessdose mit sensiertem Federkörper. Der Kraftsensor ist vorzugsweise als einaxialer Kraftsensor ausgeführt. Vorstehend wurde bereits erwähnt, dass derartige einaxiale Kraftsensoren üblicherweise zwei Kraftangriffsflächen aufweisen, umfassend eine meist kleine, erste Kraftangriffsfläche zur Einleitung der Messkraft in das Sensorelement und eine zweite Kraftangriffsfläche, die üblicherweise Teil des die Kraftmessvorrichtung zumindest zum Teil umgebenden Gehäuses ist oder durch diejenige Außenfläche der Kraftmessvorrichtung gebildet wird, über die sich die Kraftmessvorrichtung bei einer Krafteinwirkung abstützt. Die erste Kraftangriffsfläche kann beispielsweise Teil eines aus dem Kraftsensorgehäuse herausragenden Federkörpers sein. Der Kraftsensor kann jedoch auch als zweiaxialer Kraftsensor ausgeführt sein.

Die erfindungsgemäße Kraftmessvorrichtung weist ferner Mittel zur Kompensation von Querkraft- und Biegemomenteinflüssen auf, d. h. Mittel, die die bei der Messung oft auftretenden Querkräfte und Biegemomente möglichst unschädlich für die Kraftmessvorrichtung und das Messergebnis machen. Mit anderen Worten umfasst die Kraftmessvorrichtung Mittel, die selbstständig Kipp- und Querbewegungen der die Messkraft auf die Messvorrichtung übertragenden Komponente, z. B. eines Bremskolbens, ausgleichen kann, um Querkraft- und Biegemomenteinflüsse zu kompensieren.

Gemäß allgemeinen Gesichtspunkten der Erfindung weisen die Mittel zur Kompensation von Querkraft- und Biegemomenteinflüssen ein Bauteil auf, nachfolgend als Ausgleichselement bezeichnet, auf dem sich der Kraftsensor unmittelbar oder mittelbar über eine erste gekrümmte Gleitfläche abstützt. Hierbei ist eine dem Kraftsensor zugewandte Seite des Ausgleichselements als eine zweite gekrümmte Gleitfläche ausgeführt, in die die erste gekrümmte Gleitfläche zum Ausgleich einer relativ zur Messachse erfolgenden Kippbewegung eingreift wobei vorzugsweise die erste gekrümmte Gleitfläche und die zweite gekrümmte Gleitfläche die gleiche Krümmung aufweisen und gleitverschieblich flächig aneinander anliegen. Dadurch können eine Hertz'sche Pressung und eine unzulässige Beanspruchung der Elemente bedingt durch einen Punkt- oder Linienkontakt im Kraftfluss der Kraftmessvorrichtung vermieden werden. Ferner weist eine dem Kraftsensor abgewandte Seite des Ausgleichelements eine plane Gleitfläche auf, die zum Ausgleich einer Querbewegung auf einer planen Aufstandsgleitfläche quer zur Messachse gleitverschieblich gelagert ist. Diese Kombination aus Ausgleichselement, den gleitverschieblich flächig aneinander anliegenden gekrümmten Gleitflächen und planer Aufstandsgleitfläche ermöglicht eine baulich kompakte Ausführung zum Ausgleich von Quer- und Kippbewegungen. Das Ausgleichselement kann ein einteilig oder mehrteilig ausgeführtes Bauteil sein.

Die erste gekrümmte Gleitfläche und die zweite gekrümmte Gleitfläche können als ballige bzw. als kugelhaubenförmig gewölbte Gleitflächen ausgeführt sein. Der Kraftsensor ist somit unmittelbar oder mittelbar über die gekrümmte erste Gleitfläche kugelgelenkartig auf dem Ausgleichselement gelagert.

Gemäß einer besonders bevorzugten Ausgestaltungsform ist die erste gekrümmte Gleitfläche konvex und die zweite gekrümmte Gleitfläche konkav, was einen vorteilhaften Kippradius ermöglicht.

Die Mittel zur Kompensation von Querkraft- und Biegemomenteinflüssen sind vorzugsweise auf der Seite des Kraftsensors angeordnet, die gegenüberliegend zur Angriffsstelle der Messkraft bzw. gegenüberliegend zur ersten Kraftangriffsfläche des Kraftsensors ist. Kraftsensor und die Mittel zur Kompensation von Querkraft- und Biegemomenteinflüssen, insbesondere das Ausgleichselement, sind koaxial angeordnet.

Die konkave Gleitfläche und die konvexe Gleitfläche können als formkongruent gekrümmte Gleitflächen, die gegeneinander gepresst sind, ausgebildet sein.

Eine Möglichkeit der erfindungsgemäßen Realisierung der ersten gekrümmten Gleitfläche sieht vor, diese als Teil eines den Kraftsensor umgebenden Gehäuses auszubilden, so dass der Kraftsensor unmittelbar auf dem Ausgleichselement gelagert ist. Dadurch kann auf ein zusätzliches Kippelement zwischen Kraftsensor und Ausgleichselement verzichtet und die Bauhöhe reduziert werden.

Eine weitere Möglichkeit der erfindungsgemäßen Realisierung der ersten gekrümmten Gleitfläche sieht vor, ein zusätzliches Bauteil, nachfolgend als Kippelement bezeichnet, vorzusehen, das zwischen dem Kraftsensor und dem Ausgleichselement angeordnet ist und das mit dem Kraftsensor verbunden ist. Gemäß dieser Variante ist die erste gekrümmte Gleitfläche eine Außenfläche des Kippelements an der dem Kraftsensor abgewandten Seite des Kippelements. Das Kippelement ist so mit dem Kraftsensor verbunden, dass es bei einer Kraftmessung nur Bewegungen zusammen mit Kraftsensor ausführt, d. h. keine Relativbewegung zwischen Kraftsensor und Kippelement erfolgt. Die Variante bietet den Vorteil, dass der Kraftsensor selbst kein Gehäuse mit einer ersten gekrümmten Gleitfläche aufweisen muss, so dass handelsübliche Kraftsensoren verwendet werden können.

Ferner kann die Kraftmessvorrichtung wenigstens ein Adapterelement aufweisen, das zur Ausbildung einer Kraftangriffsfläche am Kraftsensor auf der in Bezug auf das Ausgleichselement gegenüberliegenden Seite des Kraftsensors befestigt ist. Dadurch kann die Kraftmessvorrichtung an unterschiedliche Anwendungen angepasst werden, beispielsweise um die Kraftmesseinrichtung an verschieden große zuspannende Bremskolben anzupassen. In diesem Fall stützt sich das Adapterelement mit einer ersten Außenfläche auf der ersten Kraftangriffsfläche des Kraftsensors (bei Kraftsensor ohne Adapterelement) ab und bildet mit einer zweiten, hierzu gegenüberliegenden Außenfläche eine neue erste Kraftangriffsfläche der Kraftmessvorrichtung aus, auf der sich das kraftausübende Element, z. B. der Bremskolben, abstützt, wenn der Kraftsensor das Adapterelement aufweist.

Gemäß einer bevorzugten Ausgestaltungsform ist ein Krümmungsradius der konvexen Gleitfläche so gewählt, dass er in einem Bereich zwischen dem 0,5- und 1,5-fachen eines Abstands der konvexen Gleitfläche von einer Kraftangriffsfläche der Kraftmessvorrichtung liegt. Hierbei ist diejenige Kraftangriffsfläche gemeint, die in Bezug auf die konvexe Gleitfläche in Richtung der Messachse auf einer gegenüberliegenden Seite des Kraftsensors liegt und welche, bei Anwendung der Kraftmessvorrichtung bei Radbremsen, üblicherweise mit dem Bremskolben im Eingriff steht. Die konvexe Gleitfläche kann somit einen Krümmungsradius aufweisen, der im Wesentlichen einer Bauhöhe in Richtung der Messachse von einer Baugruppe entspricht, die aus dem Kraftsensor, dem Kippelement und, falls vorhanden, dem wenigstens einen Adapterelement gebildet wird. Diese Ausführungsvariante bietet den Vorteil, einerseits eine schnelle Ausrichtung zu ermöglichen, ohne andererseits die kugelgelenkartige Lagerung anfällig für ein instabiles Kippen zu machen. Falls die Bauhöhe sehr viel größer als der Krümmungsradius wäre, wäre die kugelgelenkartige Lagerung anfällig für ein instabilen Stand und somit Kippen im kraftfreien Zustand. Falls die Bauhöhe sehr viel kleiner als der Krümmungsradius wäre, könnte die benötigte Rotation zum Kippausgleich nicht mehr dargestellt werden.

Die Elemente dieser Baugruppe sind so miteinander verbunden, dass sie sich bei einem Kraftmessvorgang nur zusammen und mit Ausnahme eines rotatorischen Freiheitsgrades um die Messachse nicht relativ zueinander bewegen.

Die Kraftmessvorrichtung kann ferner ein elastisches Element aufweisen, durch welches das Ausgleichselement zentriert und in seiner Querbewegung begrenzt wird. Dies verhindert eine zu starke Verschiebung des Ausgleichselements und damit des Kraftsensors beim Ausgleich einer Querbewegung und bewirkt ferner eine automatische Rückstellung in die Ausgangsposition. Das elastische Element kann am Ausgleichselement umfangsseitig angeordnet sein und mit seiner Außenseite an einer Halterung oder an einem Gestell zur Halterung der Kraftmesseinrichtung anliegen. Eine kostengünstige Ausführungsvariante hierbei ist, das Ausgleichselement beispielsweise als einen elastischen Dichtring auszuführen, der in einer Umfangsnut des Ausgleichselements gehaltert ist. Gemäß einem weiteren Aspekt der Erfindung kann das Ausgleichselement zylinderförmig ausgeführt sein, wobei in der Zylindermantelfläche die Umfangsnut zur Aufnahme des elastischen Dichtrings eingebracht ist und eine der Zylinderdeckflächen nicht eben, sondern konkav ausgeführt ist.

Gemäß einem weiteren Aspekt der Erfindung kann die plane Aufstandsgleitfläche als Außenseite eines Gleitelements ausgebildet sein, das sich auf der dem Kraftsensor abgewandten Seite vollflächig auf einer Halterung oder auf einem Gestell zur Halterung der Kraftmesseinrichtung abstützt. Gemäß dieser Variante stellt die Fläche, mit der sich das Gleitelement auf dem Gestell oder der Halterung abstützt, die zweite Kraftangriffsfläche der Kraftmesseinrichtung dar. Um eine möglichst geringe Bauhöhe zu ermöglichen, kann das Gleitelement scheibenförmig ausgebildet sein.

Gemäß einer bevorzugten Ausführungsvariante sind der Kraftsensor, das Kippelement, das Ausgleichselement und das Gleitelement koaxial zur Messachse angeordnet.

Der Erfindung betrifft ferner eine Prüfvorrichtung, umfassend eine Kraftmessvorrichtung wie hierin offenbart, die vorzugsweise in einem Belagschacht eines Bremssattels eines Kraftfahrzeugs, insbesondere eines Nutzfahrzeugs, angeordnet ist, z. B. derart, dass eine Zuspannvorrichtung des Bremssattels auf die Kraftmessvorrichtung drückt und die Kraftmessvorrichtung vom Bremssattel abgestützt ist.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
Figur 1 eine Kraftmessvorrichtung im Längsschnitt gemäß einer Ausführungsform der Erfindung; und
Figur 2 eine Explosionsdarstellung der in Figur 1 dargestellten Kraftmessvorrichtung.

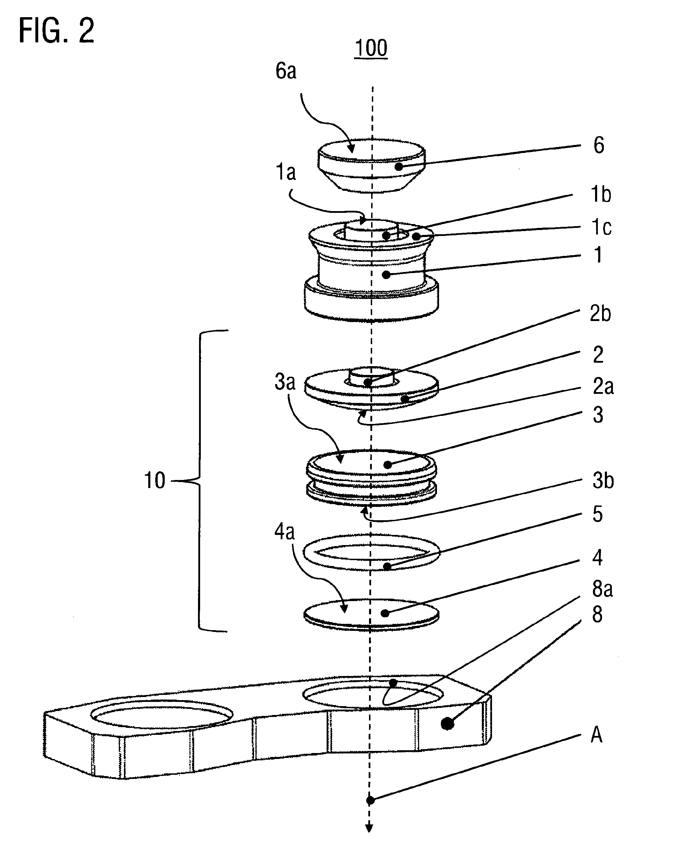

Gleiche oder funktional äquivalente Elemente sind in allen Figuren mit denselben Bezugszeichen bezeichnet. Die Kraftmessvorrichtung 100 umfasst einen Kraftsensor, der als handelsübliche einaxiale Kraftmessdose 1 ausgebildet ist. Die gestrichelte Linie in Figur 2 gibt dabei die Messachse A der Kraftmessdose an, wobei die Pfeilrichtung die Richtung der zu messenden, auf die Kraftmessdose 1 wirkenden äußeren Messkraft darstellt, wenn diese keine unerwünschten Querkraftkomponenten aufweist.

Die Kraftmessdose weist eine Kraftangriffsfläche 1 a auf, die Teil des aus dem Gehäuse 1 c des Kraftsensors 1 bzw. der Kraftmesseinrichtung herausragenden Federkörpers 1 b ist. In der vorliegenden Ausführungsform ist ein zusätzliches Adapterelement 6 auf der Kraftmessdose 1 aufgesteckt, um die Kraftangriffsfläche 1 a zu vergrößern. Mittels des Adapterelements 6 wird daher eine vergrößerte Kraftangriffsfläche 6a bereitgestellt, die z. B. an die Kontaktfläche 9a eines Bremskolbens 9 angepasst ist. Um auf die Kraftmessdose 1 aufgesteckt zu werden, weist das Adapterelement 6 an seiner Unterseite eine zylinderförmige Ausnehmung auf, die an den zylinderförmigen Teil des aus dem Gehäuse 1c des Kraftsensors 1 herausragenden Federkörpers 1 b bzw. an den Durchmesser der Kraftangriffsfläche 1 a formangepasst ist.

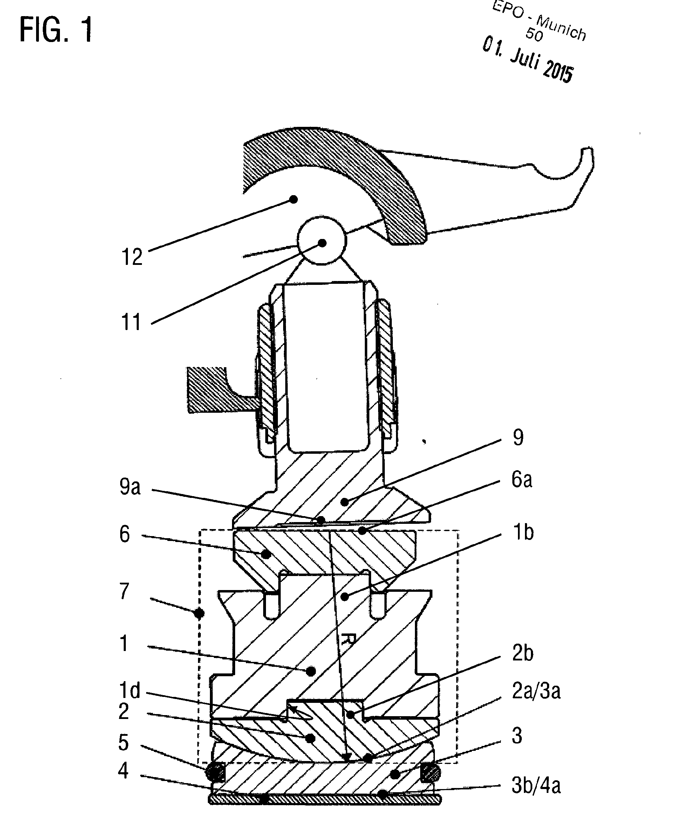

Auf der in Richtung der Messachse A zum Adapterelement 6 gegenüberliegenden Seite der Kraftmessdose 1 weist die Kraftmessvorrichtung 100 Mittel 10 zur Kompensation von Querkraft- und Biegemomenteinflüssen auf, die relativ zur Messachse der Kraftmessdose 1 auftreten. Insbesondere sind die weiteren Bauteile 2, 3, 4 und 5 in den Kraftfluss eingebracht, die verhindern, dass eine in Bezug auf die Messachse A schräge Krafteinleitung zu einer Verfälschung des Messergebnisses führt oder dass eine Kippbewegung des Bremskolbens 9, wie in Figur 1 durch die nicht parallelen Flächen 6a und 9a angedeutet, zu schädlichen Biegemomenten führen.

Die Mittel 10 umfassen ein zur Kraftmessdose koaxial angeordnetes Kippelement 2, das mit der Kraftmessdose 1 auf ihrer zum Adapterelement und der Messkraftangriffsstelle gegenüberliegenden Seite verbunden ist. Hierzu weist das Kippelement 2 an seiner der Kraftmessdose 1 zugewandten Seite einen zylinderförmigen Stecker 2b auf, der in eine zylinderförmige Ausnehmung 1 d der Kraftmessdose 1 eingesteckt wird. Die der Kraftmessdose 1 abgewandten Außenfläche 2a des Kippelements 2 ist als konvexe Gleitfläche 2a ausgeführt. Das Adapterelement und das Kippelement 2 sind über die Steckverbindungen zwar lösbar mit der Kraftmessdose 1 verbunden, bewegen sich jedoch bei einer Kraftmessung immer nur zusammen mit der Kraftmessdose 1, d. h., es findet somit keine Relativbewegung zwischen den Elementen dieser Baugruppe 7 statt. In Figur 1 ist diese Baugruppe mit der gestrichelten Einrahmung 7 gekennzeichnet.

Die Mittel 10 umfassen ferner ein zur Kraftmessdose und zum Kippelement 2 koaxial angeordnetes Ausgleichselement 3, dessen dem Kraftsensor 1 zugewandte Seite 3a als konkave Gleitfläche 3a ausgeführt ist, in die die konvexe Gleitfläche 2a des Kippelements 2 zum Ausgleich einer Kippbewegung relativ zur Messachse A eingreift. Die Kraftmessdose 1 stützt sich somit über die konvexe Gleitfläche 2a des Kippelements 2 auf der konkaven Gleitfläche 3a ab.

Hierbei sind die konkave Gleitfläche 3a und die konvexe Gleitfläche 2a als formkongruente gekrümmte Gleitflächen ausgeführt, d. h. als Gleitflächen, die die gleiche Krümmung, die gleiche Fläche und den gleichen Durchmesser aufweisen und gleitverschieblich flächig aneinander anliegen. Die Kraftmessdose 1 ist somit über die ineinandergreifenden Gelenkflächen 2a, 3a kugelgelenkartig auf dem Ausgleichselement 3 gleitverschieblich gelagert. Bei Auftreten einer Kippbewegung der Kraftmessdose 1 verschieben sich somit die Gelenkflächen 2a, 3a relativ zueinander, wobei die Kraftmessdose 1 derart kippt, dass die Kraft in Messachsenrichtung eingeleitet wird, wodurch die Kippbewegung kompensiert werden kann.

Ferner werden durch den flächigen Kontakt der Gelenkflächen 2a, 3a eine Hertz'sche Pressung und eine unzulässige Beanspruchung, insbesondere eine Punkt- und Linienbeanspruchung, und damit eine Beschädigung der Elemente vermieden.

Wie in Figur 1 durch den mit R gekennzeichneten Pfeil dargestellt, entspricht der Krümmungsradius R der konvexen Gleitfläche 2a dem Abstand der konvexen Gleitfläche 2a von dem Mittelpunkt der durch das Adapterelement 6 gebildeten Kraftangriffsfläche 6a der Kraftmessvorrichtung 100, welche in Kontakt mit dem Bremskolben 9 gebracht wird. Mit anderen Worten entspricht der Krümmungsradius R der konvexen Gleitfläche 2a und der konkaven Gleitfläche 3a der Bauhöhe der Baugruppe 7, gebildet aus Adapterelement 6, Kraftmessdose 1 und Kippelement 2.

Die der Kraftmessdose abgewandte Außenfläche 3b des Ausgleichselements 3 ist als plane Gleitfläche 3b ausgeführt, die zum Ausgleich einer Querbewegung auf einer planen Aufstandsgleitfläche 4a eines Gleitelements 4 quer zur Messachse A gleitverschieblich gelagert ist. Das scheibenförmige Gleitelement 4 selbst stützt sich vollflächig mit einer Unterseite auf einem Gestell 8 ab. Das Gestell 8 weist hierzu eine zum Gleitelement formangepasste Ausnehmung 8a auf, in die das Gleitelement 4 eingelegt werden kann. Das in Figur 2 gezeigte Gestell 8 verfügt über eine zweite zum Gleitelement formangepasste Ausnehmung 8a, in der eine zweite (nicht gezeigt) baugleiche Kraftmessvorrichtung 100 gehaltert werden kann.

Weist die auf die Kraftmessvorrichtung 100 einwirkende und an der Kraftangriffsfläche 6a angreifende Messkraft eine Komponente quer zur Messachse A (Querkraft) auf, bewirkt diese Querkraft ein Verschieben des Ausgleichselements 3 auf dem Gleitelement 4. Diese Querbewegung erfolgt senkrecht zur Messachse A.

Das Ausgleichselement 3 weist umfangsseitig eine Umfangsnut auf, in die ein elastisches Element in Form eines Dichtrings 5 eingelegt ist, der sich mit seiner Umfangsaußenseite wiederum am Gestell 8 abstützt (nicht dargestellt). Mittels des Dichtrings 5 wird das Ausgleichselement 3 zentriert und in seiner Querbewegung begrenzt.

Eine hervorgehobene Anwendung der Kraftmessvorrichtung 100 stellt die Messung der Hysterese von Radbremsen dar. Hierbei wird die Kraftmessvorrichtung 100 in einen Belagschaft eines Bremssattels gelegt, so dass die Zuspannvorrichtung des Bremssattels über die Kraftangriffsfläche 6a des Adapterelements 6 auf die Kraftmessdose 1 drückt und die Kraftmessvorrichtung 100 gleichzeitig vom Bremssattel abgestützt wird.

In Figur 1 ist die Zuspannvorrichtung einer Scheibenbremse lediglich teilweise dargestellt, die jedoch in an sich bekannter Weise ausgeführt sein kann. Bei einer Bewegung des Bremshebels 12 der Zuspannvorrichtung bewegt sich die Schwenkachse 11 axial entlang der Messachse A und drückt den im Bremssattel geführten Bremskolben 9 auf die Kraftangriffsfläche 6a der Kraftmessvorrichtung 100. Ist der Bremskolben 9 hierbei leicht in Bezug auf die Messachse A verkippt, so dass die Kontaktfläche 9a des Bremskolbens nicht exakt parallel zur Kraftangriffsfläche 6a ist, führt die Baugruppe 7 der Kraftmessvorrichtung 100 eine leichte Kippbewegung aus, indem sich die beiden Gelenkflächen 2a, 3a gegeneinander verschieben, so dass die Krafteinleitung in Richtung der Messachse A erfolgt.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Kraftsensor, Kraftmessdose
- 1a: Kraftangriffsfläche der Kraftmessdose
- 1b: Herausragender Teil des Federglieds
- 1c: Gehäuse Kraftmessdose
- 1d: Ausnehmung
- 2: Kippelement
- 2a: Konvexe Gleitfläche
- 2b: Stecker
- 3: Ausgleichselement
- 3a: Konkave Gleitfläche
- 3b: Plane Gleitfläche
- 4: Scheibenförmiges Gleitelement
- 4a: Plane Gleitfläche
- 5: Dichtelement
- 6: Adapterelement
- 6a: Kraftangriffsfläche
- 7: Baugruppe
- 8: Halterung
- 8a: Ausnehmung
- 9: Bremskolben
- 9a: Kontaktfläche
- 10: Mittel zur Kompensation von Querkraft- und Biegemomenteinflüssen
- 11: Schwenkachse
- 12: Bremshebel
- 100: Kraftmessvorrichtung
- A: Messachse

## Patentansprüche

1. Kraftmessvorrichtung (100), umfassend
einen Kraftsensor (1); und
Mittel zur Kompensation von Querkraft- und Biegemomenteinflüssen relativ zur Messachse des Kraftsensors,
**dadurch gekennzeichnet, dass**
die Mittel (10) zur Kompensation von Querkraft- und Biegemomenteinflüssen ein Ausgleichselement (3) umfassen, auf dem sich der Kraftsensor (1) unmittelbar oder mittelbar über eine erste gekrümmte Gleitfläche (2a) abstützt, wobei eine dem Kraftsensor (1) zugewandte Seite (3a) des Ausgleichselements (3) als eine zweite gekrümmte Gleitfläche (3a) ausgeführt ist, in die die erste gekrümmte Gleitfläche (2a) zum Ausgleich einer Kippbewegung relativ zur Messachse eingreift, wobei vorzugsweise die erste gekrümmte Gleitfläche (2a) und die zweite gekrümmte Gleitfläche (3a) die gleiche Krümmung aufweisen und gleitverschieblich flächig aneinander anliegen, und eine dem Kraftsensor (1) abgewandte Seite (3b) des Ausgleichelements (3) eine plane Gleitfläche (3b) aufweist, die zum Ausgleich einer Querbewegung auf einer planen Aufstandsgleitfläche (4a) quer zur Messachse gleitverschieblich gelagert ist.

2. Kraftmessvorrichtung (100) nach Anspruch 1, **dadurch gekennzeichnet, dass** die erste gekrümmte Gleitfläche (2a) konvex und die zweite gekrümmte Gleitfläche (3a) konkav ist.

3. Kraftmessvorrichtung (100) nach Anspruch 1 oder 2, **dadurch gekennzeichnet,**
(a) **dass** die erste gekrümmte Gleitfläche (2a) als Teil eines den Kraftsensor (1) umgebenden Gehäuses ausgebildet ist; oder
(b) **dass** die zweite gekrümmte Gleitfläche (2a) eine Außenfläche eines zwischen dem Kraftsensor (1) und dem Ausgleichselement (3) angeordneten Bauteils (2) ist, das mit dem Kraftsensor (1) verbunden ist.

4. Kraftmessvorrichtung (100) nach einem der vorhergehenden Ansprüche, **gekennzeichnet durch** ein Adapterelement (6), das zur Ausbildung einer Kraftangriffsfläche (6a) mit dem Kraftsensor (1) auf der in Bezug auf das Ausgleichselement (3) gegenüberliegenden Seite des Kraftsensors (1) verbunden ist.

5. Kraftmessvorrichtung (100) nach einem der vorhergehenden Ansprüche 2 bis 4, **dadurch gekennzeichnet, dass** ein Krümmungsradius der konvexen Gleitfläche (2a) in einem Bereich zwischen dem 0,5- und 1,5-fachen eines Abstands der konvexen Gleitfläche (2a) von einer Kraftangriffsfläche der Kraftmessvorrichtung (100) liegt, die in Bezug auf die konvexe Gleitfläche (2a) in Richtung der Messachse auf einer gegenüberliegenden Seite des Kraftsensors (1) liegt.

6. Kraftmessvorrichtung (100) nach einem der vorhergehenden Ansprüche, **gekennzeichnet durch** ein elastisches Element (5),
(a) **durch** welches das Ausgleichselement zentriert und in seiner Querbewegung begrenzt wird; und/oder
(b) das am Ausgleichselement (3) umfangsseitig angeordnet ist und mit seiner Außenseite an einem Gestell oder einer Halterung (8) zur Halterung der Kraftmesseinrichtung anliegt; und/oder
(c) das als elastischer Dichtring ausgeführt ist.

7. Kraftmessvorrichtung (100) nach einem der vorhergehenden Ansprüche, **dadurch gekennzeichnet, dass** die plane Aufstandsgleitfläche (4a) als Außenseite eines Gleitelements (4) ausgebildet ist, das sich auf der dem Kraftsensor (1) abgewandten Seite vollflächig auf einem Gestell oder einer Halterung (8) zur Halterung der Kraftmesseinrichtung abstützt.

8. Kraftmesseinrichtung nach Anspruch 7, **dadurch gekennzeichnet, dass** das Gleitelement (4) scheibenförmig ausgebildet ist.

9. Kraftmessvorrichtung (100) nach einem der vorhergehenden Ansprüche, **dadurch gekennzeichnet,**
(a) **dass** der Kraftsensor (1) und die Mittel zur Kompensation von Querkraft- und Biegemomenteinflüssen koaxial angeordnet sind, insbesondere koaxial zur Messachse; und/oder
(b) **dass** der Kraftsensor als Kraftmessdose (1) ausgeführt ist; und/oder
(c) **dass** der Kraftsensor als einaxialer Kraftsensor (1) ausgeführt ist.

10. Prüfvorrichtung, umfassend eine Kraftmessvorrichtung (100) nach einem der Ansprüche 1 bis 9, wobei die Kraftmessvorrichtung (100) in einem Belagschacht eines Bremssattels eines Kraftfahrzeugs, insbesondere eines Nutzfahrzeugs, angeordnet ist.
